# EUROPÄISCHE PATENTSCHRIFT

(11) **EP 1 056 568 B1**
(45) Veröffentlichungstag und Bekanntmachung des Hinweises auf die Patenterteilung: **21.11.2001**
(21) Anmeldenummer: 99903629.6
(22) Anmeldetag: 14.01.1999
(51) Int. Cl.: B25B 23/14, B23P 19/06

(54) **VERFAHREN ZUM ANZIEHEN VON VERSCHRAUBUNGEN**
METHOD FOR TIGHTENING SCREW JOINTS
PROCEDE POUR SERRER DES ASSEMBLAGES A VIS

(30) Priorität: 05.02.1998 DE 19804459
(43) Veröffentlichungstag der Anmeldung: 06.12.2000
(73) Patentinhaber: DaimlerChrysler AG, 70567 Stuttgart (DE)
(72) Erfinder: QUICKERT, Matthias, D-75181 Pforzheim (DE)
(86) Internationale Anmeldenummer: EP9900172
(87) Internationale Veröffentlichungsnummer: WO9939880

(56) Entgegenhaltungen:
- EP-A- 0 096 620
- DE-A- 3 230 642
- DE-A- 3 521 937
- DE-A- 4 024 577
- DE-A- 4 033 494
- R.KISCHKAT ET AL.: "FEHLERERKENNUNG BEI AUTOMATISCHEN VERSCHRAUBUNGEN MIT HILFE VON FUZZY-LOGIK" MASCHINENMARKT, Bd. 102, Nr. 20, 1996, Seiten 40-43, XP002102830 WÜRZBURG,DE in der Anmeldung erwähnt

## Beschreibung

Die Erfindung betrifft Verfahren zum Anziehen von Verschraubungen in der Serienmontage, bei dem eine Verschraubung, jeweils drehmoment-drehwinkel-überwacht, ein erstes Mal mit Soll-Moment angezogen, danach um einen bestimmten Drehwinkel wieder gelöst und ein zweites Mal mit Soll-Moment angezogen wird.

Zum Anziehen von Verschraubungen in der Serienmontage sind im wesentlichen drehmomentgesteuerte und/oder drehwinkelgesteuerte Verfahren bekannt. Mit diesen bekannten Verfahren wird mehr oder weniger genau die gewünschte Schraubenvorspannkraft der jeweiligen Verschraubung erreicht, die als Kenngröße für jede Verschraubung festgelegt ist. Eine gleichbleibende, reproduzierbare Qualität der Verschraubung, das heißt eine gleichmäßige Schraubenvorspannkraft bei jedem Anzug, läßt sich jedoch nicht erreichen, da die erzielte Schraubenvorspannkraft aufgrund einer Vielzahl von sie bestimmenden Faktoren beträchtlich schwankt. Zum Beispiel beeinflussen Öl und Schmutz im Gewinde den Reibungskoeffizienten, der wiederum direkten Einfluß auf die bei vorgegebenem Drehmoment erzielte Schraubenvorspannkraft hat. Des weiteren haben auch die Eigenschaften des Festspannwerkzeuges Einfluß auf die resultierende Schraubenvorspannkraft, da zum Beispiel bei Verwendung eines Motors dieser beim Abschalten aufgrund der Trägheit der involvierten Massen die festzuziehende Schraube noch etwas weiter dreht und eine höhere als die gewünschte Schraubenvorspannkraft bewirkt.

Beim drehmomentgesteuerten Anziehverfahren, welches auf der Annahme beruht, daß die auf die Schraube einwirkende Vorspannkraft proportional zum aufgebrachten Drehmoment ist, wird der Abschaltpunkt des Schraubvorganges durch einen definierten Drehmomentmeßwert festgelegt. Um diesen vorgegebenen Drehmomentwert beim Anziehen gezielt anfahren zu können, kann der Drehmomentverlauf während des Anziehens überwacht werden, wie bei pielweise in der US 5,591,919 beschrieben, oder die Verschiaubung kann dreistufig mit jeweils abnehmenden Drehgeschwindigkeiten angezogen werden, wie in der US 5,062,491 beschrieben. Auch ist es bekannt, zum Verkürzen der zum Spannen erforderlichen Zeit während vorhergehender Lernzyklen Parameter zu erfassen, um so den Motor beim Anziehen der Verschraubung mit hoher Geschwindigkeit laufen lassen und exakt stoppen zu können, wenn das gewünschte Drehmoment erreicht ist, wie in der EP 753 377 A1 beschrieben. Umgekehrt ist es ebenfalls bekannt, zur zeitlichen Streckung des Schraubvorganges das Werkzeug mit einer Feder zu versehen, die zwischen dem Antriebselement und dem Greifelement des Werkzeugs angeordnet ist, wie in der DE 32 10 929 A1 offenbart. Um hier ein Schwingen der Feder zu vermeiden, wird der Motor bei vorgegebenem Festspann-Drehmoment in Gegenlauf geschaltet, um die Feder zu entspannen, danach abgeschaltet und kurz wieder in ursprüngliche Drehrichtung geschaltet. Schließlich ist aus der DE 35 21 937 A1 ein drehmomentgesteuertes Anziehverfahren bekannt, bei dem das zum Erreichen der vorgegebenen Vorspannkraft erforderliche Drehmoment frei von Reibkräften bestimmt werden kann. Hierzu wird die Verschraubung vor Erreichen des Festspannpunktes um einen bestimmten Drehwinkel zurückgedreht und bei Erreichen eines festgelegten Drehwinkels wieder bis zum Festspannpunkt angezogen. Aus der Differenz zwischen dem Anzugsdrehmoment und dem Gegendrehmoment bei dem festgelegten Drehwinkel wird die auf die Schraube aufgebrachte Spannkraft frei von Reibkräften berechnet.

Das drehwinkelgesteuerte Anziehverfahren geht davon aus, daß bei aufliegendem Schraubenkopf und zusammengefügten Bauteilen die Dehnung der Schraube und damit die in ihr erzeugte Axialkraft proportional zu dem Winkel ist, um den die Schraube gedreht wird. So ist zum Beispiel aus der DE 42 14 354 A1 ein drehmoment-drehwinkel abhängiges Anziehverfahren bekannt, bei dem beim Anziehen der Verschraubung zunächst der Fügepunkt ermittelt wird und anschließend von diesem Fügepunkt der Abschaltpunkt entweder nach vorgegebenen Drehmomentwerten oder nach vorgegebenen Drehwinkelwerten bestimmt wird. Aus der US 5,284,217 ist es bekannt, das Drehmoment und den Drehwinkel während des Anziehens zu überwachen, um so zum einen das erforderliche Drehmoment zur Erreichung einer vorgegebenen Vorspannkraft zu bestimmen und zum anderen zu überprüfen, ob ein vorgegebenes Toleranzfeld bezüglich des Drehmoments und des Drehwinkels eingehalten wird. Schließlich ist es auch bekannt, insbesondere bei sicherheitsrelevanten Bauteilen, die Schrauben nach dem Festziehen um einen definierten Winkel zu lösen und erneut mit vorgegebenem Soll-Moment festzuziehen. Hierbei wird das Drehmoment über dem Drehwinkel aufgezeichnet und die Form des Drehmomentenverlaufs für eine Beurteilung bezüglich der Güte der Verschraubung und Fehlerursachen herangezogen (Maschinenmarkt, Würzburg 102 (1996) 20).

Wie schon erwähnt, wird mit diesen bekannten Anziehverfahren ein mehr oder weniger genaues Erreichen der erforderlichen Vorspannkraft der Verschraubung möglich, im wesentlichen durch die Erfassung von Drehmoment und Drehwinkel. Inwieweit diese erzielte Vorspannkraft im Betrieb der Verschraubung durch Setzerscheinungen reduziert wird, läßt sich mit diesem Verfahren jedoch nicht beurteilen. Setzerscheinungen treten in Schraubverbindungen durch Fließen des Materials in Folge des Anziehens auf und führen zu einem selbsttätigen Lockern oder gar Lösen der Verschraubung durch Reduzieren der Vorspannkraft.

Vor diesem Hintergrund ist es daher Aufgabe der vorliegenden Erfindung, ein Verfahren zum Anziehen von Verschraubungen in der Serienmontage zur Verfügung zu stellen, bei dem eine Verschraubung, jeweils drehmoment-drehwinkel-überwacht, ein erstes Mal mit Soll-Moment angezogen, danach um einen bestimmten Drehwinkel wieder gelöst und ein zweites Mal mit Soll-Moment angezogen wird, mit dem Setzerscheinungen in Schraubverbindungen erkannt werden können.

Gelöst wird diese Aufgabe dadurch, daß die absolute Drehwinkeldifferenz zwischen dem ersten und dem zweiten Anziehen ermittelt und die Größe dieses Differenzbetrages als prozeßrelevante Kenngröße zu Überwachungszwecken herangezogen wird.

Diese ermittelte absolute Drehwinkeldifferenz zwischen dem ersten und dem zweiten Anzug ist ein Maß für Setzerscheinungen, wie sie in Schraubverbindungen aufgrund unterschiedlicher Ursachen auftreten können. Damit lassen sich Setzerscheinungen in Schraubverbindungen schon beim Anziehen der Verschraubung leicht erkennen, und durch den Vergleich des ermittelten Differenzbetrages mit einem vorgegebenen Toleranzwert kann die Sicherheit der Verschraubung deutlich gesteigert und damit deren Qualität insgesamt verbessert werden.

Liegt die ermittelte absolute Drehwinkeldifferenz unterhalb einer vorgegebenen minimalen Winkeldifferenz oder überhalb einer vorgegebenen maximalen Winkeldifferenz, so liegt ein unzulässiger Winkelversatz vor, der neben der Abschätzung von Setzerscheinungen oder dem Setzmaß auch Rückschlüsse auf mögliche Fehlerquellen der Verschraubung liefern kann. Daher wird gemäß einer besonders bevorzugten Ausführungsform die absolute Drehwinkeldifferenz mit einer vorgegebenen minimalen und maximalen Drehwinkeldifferenz verglichen und eine Fehlermeldung erzeugt, wenn die ermittelte Drehwinkeldifferenz oberhalb oder unterhalb dieser vorgegebenen Winkeldifferenzwerte liegt.

Diese zwei zusätzlichen Parameter lassen sich leicht und ohne großen Aufwand in Prozeßsteuerungen vorhandener Montagebänder ablegen, so daß das erfindungsgemäße Verfahren einfach in bestehende Serienmontagen integriert werden kann. Vorteilhafterweise wird die Verschraubung bei einer Fehlermeldung der Nacharbeit zugeführt. In der Nacharbeit kann die beanstandete Schraubverbindung gelöst und untersucht werden und die Ursache für die Fehlermeldung beseitigt werden. Es ist jedoch auch möglich, die beanstandeten Verschraubungen je nach Art der Fehlermeldung zu selektieren und beispielsweise bei einer Überschreitung der vorgegebenen maximalen Winkeldifferenz die Verschraubung einem zweiten Anziehverfahren zuzuführen, was gemäß einer weiteren bevorzugten Ausführungsform der Erfindung vorgesehen ist. Die beim zweiten Anziehverfahren ermittelte absolute Drehwinkeldifferenz wird mit dem beim ersten Anziehverfahren ermittelten Wert verglichen und eine Fehlermeldung erzeugt, wenn die zweite ermittelte Drehwinkeldifferenz bezüglich dieses Wertes überhalb oder unterhalb der vorgegebenen maximalen oder minimalen Drehwinkeldifferenz liegt. Vorteilhafterweise wird die Verschraubung bei einer Fehlermeldung der Nacharbeit zugeführt, da die Ursache mit dem nochmaligen Anziehverfahren nicht beseitigt werden konnte und genauer untersucht werden muß. Wird keine Fehlermeldung erzeugt, so wurde die Ursache für die Fehlermeldung beim ersten Anzieh-/Löseverfahren beim zweiten Anzieh/Löseverfahren beseitigt, und die Verschraubung kann wegen Einhaltung des vorgegebenen Toleranzwertes in der Serienmontage verbleiben.

Obgleich die absolute Drehwinkeldifferenz auf beliebige Weise ermittelt werden kann, sofern damit die Verwendung des Verfahrens in der Serienmontage möglich ist, ist es doch von Vorteil, wenn zum Ermitteln der absoluten Drehwinkeldifferenz das aufgebrachte Drehmoment über dem tatsächlichen Drehwinkel aufgetragen wird, so daß sich eine Darstellung in Schleifenform ergibt. In dieser Darstellung läßt sich dann einfach die Drehwinkeldifferenz zwischen dem Erstanzug und dem Zweitanzug erkennen, so daß gemäß einer vorteilhaften Ausführungsform die Winkeldifferenz aus der schleifenförmigen Drehmoment/Drehwinkeldarstellung ermittelt wird.

In einer derartigen Darstellung läßt sich gegenüber der üblichen fortlaufenden Darstellung von Drehmoment und Drehwinkel zum einen das Vor- und Zurückdrehen der Verschraubung durch Auftragen des tatsächlichen Drehwinkels, und damit dessen tatsächliche Vergrößerung bzw. Verkleinerung gut darstellen. Zum anderen und wesentlicher für das erfindungsgemäße Verfahren läßt sich einer derartigen Darstellung direkt und ohne Umwege die Drehwinkeldifferenz zwischen dem ersten und dem zweiten Anzug entnehmen.

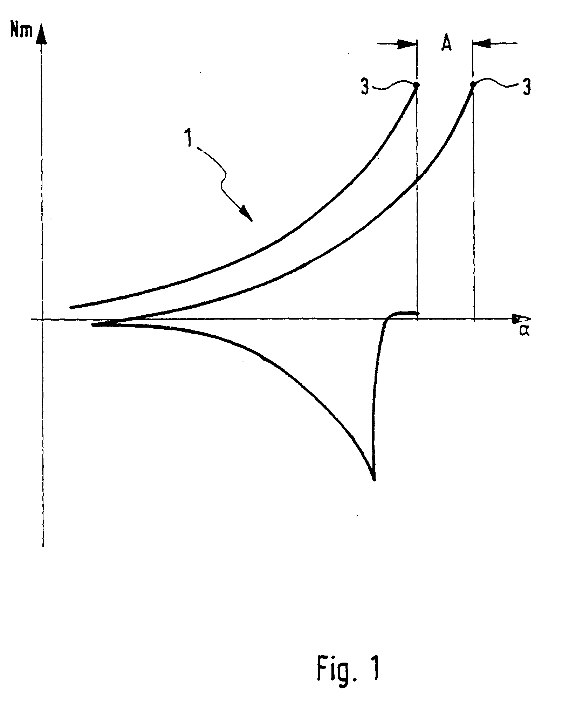

In Figur 1 ist die schleifenförmige Drehmoment/Drehwinkeldarstellung zu sehen, wobei das Drehmoment Nm über dem tatsächlichen Drehwinkel α aufgetragen ist. Damit ergibt sich beim Anziehen einer Verschraubung die dargestellte schleifenförmige Kurve 1, bei der gut zu erkennen ist, daß die Verschraubung zunächst bis zum Sollmoment 3 angezogen wird, danach das Drehmoment umgekehrt und die Verschraubung gelöst wird, um abschließend erneut bis zum Solldrehmoment 3 angezogen zu werden. Die sich hierbei ergebende Drehwinkeldifferenz A ist aufgrund der gewählten Darstellungsform deutlich zu erkennen und kann zu Überwachungszwecken herangezogen werden.

Mit dem hier beschriebenen Verfahren wird der Gesamtprozeß des Anzieh-/Löseverfahrens berücksichtigt und durch Einbeziehung der Drehwinkeldifferenz als zusätzliche Prozeßüberwachungsgröße das Erkennen von Setzerscheinungen in Schraubverbindungen schon beim Anziehen ermöglicht.

## Patentansprüche

1. Verfahren zum Anziehen von Verschraubungen in der Serienmontage, bei dem eine Verschraubung, jeweils drehmomentdrehwinkel-überwacht, ein erstes Mal mit Soll-Moment angezogen, danach um einen bestimmten Drenwinkel wieder gelöst und ein zweites Mal mit Soll-Moment angezogen wird, **dadurch gekennzeichnet, daß** die absolute Drehwinkeldifferenz zwischen dem ersten und dem zweiten Anziehen ermittelt und die Größe dieses Differenzbetrages als prozeß-relevante Kenngröße zu Überwachungszwecken herangezogen wird.

2. Verfahren nach Anspruch 1, **dadurch gekennzeichnet, daß** die absolute Drehwinkeldifferenz mit einer vorgegebenen minimalen und maximalen Drehwinkeldifferenz verglichen wird und eine Fehlermeldung erzeugt wird, wenn die Drehwinkeldifferenz überhalb oder unterhalb dieses vorgegebenen Drehwinkeldifferenzwertes liegt.

3. Verfahren nach Anspruch 2, **dadurch gekennzeichnet, daß** die Verschraubung bei einer Fehlermeldung der Nacharbeit zugeführt wird.

4. Verfahren nach Anspruch 2, **dadurch gekennzeichnet, daß** die Verschraubung bei einer Fehlermeldung und Überschreiten der maximalen Winkeldifferenz gelöst wird und ein zweites mal mit dem Anziehverfahren verschraubt wird, wobei die hierbei ermittelte absolute Drehwinkeldifferenz mit dem beim ersten Anziehverfahren ermittelten Wert verglichen wird, und eine Fehlermeldung erzeugt wird, wenn die zweite ermittelte Drehwinkeldifferenz bezüglich dieses Wertes überhalb oder unterhalb der vorgegebenen maximalen oder minimalen Drehwinkeldifferenz liegt.

5. Verfahren nach Anspruch 4, **dadurch gekennzeichnet, daß** die Verschraubung bei einer Fehlermeldung der Nacharbeit zugeführt wird.

6. Verfahren nach einem der vorangehenden Ansprüche, **dadurch gekennzeichnet, daß** zum Ermitteln der absoluten Drehwinkeldifferenz das aufgebrachte Drehmoment über dem tatsächlichen Drehwinkel aufgetragen wird, so daß sich eine Darstellung in Schleifenform ergibt.

7. Verfahren nach Anspruch 6, **dadurch gekennzeichnet, daß** aus der schleifenförmigen Drehmoment/Drehwinkeldarstellung der unzulässige Winkelversatz, der eine minimale Winkeldifferenz unterschreitet oder eine maximale Winkeldifferenz überschreitet ermittelt wird.

## Claims

1. Method of tightening screw joints in serial assembly, wherein a screw joint, respectively torque / torsion angle controlled, is tightened a first time with reference moment, then released again by a certain torsion angle and tightened a second time with reference moment,
**characterised in that** the absolute torsion angle difference between the first and the second tightening is determined and the value of this difference is used as a process-relevant characteristic value for monitoring purposes.

2. Method according to Claim 1
**characterised in that**
the absolute torsion angle difference is compared with a given minimum and maximum torsion angle difference and an error message is produced if the torsion angle difference lies above or below this given torsion angle difference value.

3. Method according to Claim 2
**characterised in that**
in the event of an error message the screw joint undergoes supplementary work.

4. Method according to Claim 2
**characterised in that**
in the event of an error message and the maximum angle difference being exceeded the screw joint is released and is screwed a second time with the tightening process, wherein the thus determined absolute torsion angle difference is compared with the value determined during the first tightening process and an error message is produced if the second determined torsion angle difference with reference to this value lies above or below the given maximum or minimum torsion angle difference.

5. Method according to Claim 4
**characterised in that**
in the event of an error message the screw joint undergoes supplementary work.

6. Method according to one of the preceding claims
**characterised in that**
for the purpose of determining the absolute torsion angle difference the torque applied is recorded over the actual torsion angle, in such a way that a representation in loop form is produced.

7. Method according to Claim 6
**characterised in that**
from the loop form representation of torque / torsion angle the inadmissible angular misalignment, which falls short of a minimum angle difference or exceeds a maximum angle difference, is determined.

## Revendications

1. Procédé de serrage d'assemblages à vis en montage de série, dans lequel on serre une première fois un assemblage à vis dont on surveille respectivement le moment de rotation et l'angle de rotation, avec un moment prescrit, puis on le desserre d'un angle de rotation déterminé et on le serre une seconde fois avec le moment prescrit, **caractérisé par le fait que** l'on détermine la valeur absolue de la différence de l'angle de rotation entre le premier et le second serragcs et que l'on utilise la valeur absolue de cette différence comme grandeur caractéristique, pertinente pour le processus, aux fins de surveillance.

2. Procédé selon la revendication 1, **caractérisé par le fait que** l'on compare la valeur absolue de la différence d'angle de rotation avec une différence d'angle de rotation minimale et une différence d'angle de rotation maximale, prescrites, et que l'on produit un message de défaut si la différence de l'angle de rotation se situe au-dcssus ou au-dessous de cette valeur prescrite de la différence de l'angle de rotation,

3. Procédé selon la revendication 2, **caractérisé par** 1c fait qu'en présence d'un message de défaut, on envoie l'assemblage à vis à une opération de reprise.

4. Procédé selon la revendication 2, **caractérisé par le fait qu'**en présence d'un message de défaut et d'un dépassement de la différence maximale de l'angle, on desserre le vissage ct on le visse une seconde fois avcc le procédé de serrage, étant précisé que l'on compare la valeur absolue de la différence de l'angle de rotation ainsi déterminée avec la valeur déterminée lors du premier procédé dc serrage et que l'on produit un message de défaut si la scconde différence d'angle de rotation déterminée se situe, par rapport à cette valeur, au-dessus ou au-dessous de la différence maximale ou minimale prescrite de l'angle de rotation.

5. Procédé selon la revendication 4, **caractérisé par le fait qu'**en présence d'un message de défaut, on envoie l'assemblage a vis à une opération de reprise.

6. , Procédé selon l'une des revendications précédentes, **caractérisé par le fait que** pour déterminer la valeur absolue de l'angle de rotation on trace le moment de rotation appliqué en fonction de l'angle de rotation effectif, ce qui donne une représentation en forme de boucle.

7. Procédé selon la revendication 6, **caractérisé par le fait qu'**à partir de la représentation en forme de boucle moment de rotation/angle de rotation, on détermine le décalage angulaire non autorisé qui dépasse par valeur inférieure une différence minimale de l'angle de rotation ou par valeur supérieure une différence maximale de l'angle de rotation.
